# NEUE EUROPÄISCHE PATENTSCHRIFT

(11) **EP 1 200 253 B2**
(45) Veröffentlichungstag und Bekanntmachung des Hinweises auf die Entscheidung über den Einspruch: **20.07.2011**
(45) Hinweis auf die Patenterteilung: 04.02.2004
(21) Anmeldenummer: 00927173.5
(22) Anmeldetag: 10.05.2000
(51) Int. Cl.: B32B 15/01, B21C 23/22

(54) **VERFAHREN ZUR HERSTELLUNG EINES ALUMINIUM-VERBUNDSWERKSTOFFES**
METHOD FOR PRODUCING AN ALUMINUM COMPOSITE MATERIAL
PROCEDE DE PRODUCTION D'UN MATERIAU COMPOSITE EN ALUMINIUM

(30) Priorität: 30.06.1999 DE 19929814
(43) Veröffentlichungstag der Anmeldung: 02.05.2002
(73) Patentinhaber: Hydro Aluminium Deutschland GmbH, 51149 Köln (DE)
(72) Erfinder: KÄSTNER, Stefan, D-52070 Aachen (DE)
(74) Vertreter: Schüll, Gottfried Hubert
(86) Internationale Anmeldenummer: PCT/EP2000/004148
(87) Internationale Veröffentlichungsnummer: WO 2001/002165

(56) Entgegenhaltungen:
- WO-A-94/10351
- JP-A- 8 025 762
- JP-A- 8 257 629
- US-A- 2 144 915
- US-A- 3 835 526
- 'Matériaux metalliques, Mise en forme des métaux et fonderie, Les Techniques de l'Ingenieur, Band MC2', September 1997, ISSN 17628733 Artikel M. JAMET & Y. DOREMUS: 'M650-Mise en forme de l'aluminium. Laminage', Seite M650-3
- Aluminium-Taschenbuch, 14. Auflage, 1988, Seiten 255, 1021-1024
- P. BARRAND & R. GADEAU: 'L'Aluminium, Tome 1', 1964 Seite 612
- JOHN HATCH: 'Aluminum: properties and physical metallurgy', Januar 1993, AMERICAN SOCIETY FOR METALS, 5. AUFLAGE Seiten 301, 372 - 373

## Beschreibung

Die Erfindung betrifft ein Verfahren zur Herstellung eines Aluminium-Verbundwerkstoffes, bei welchem auf einen Kernbarren zumindest einseitig eine Plattierschicht aufgelegt wird und der Kernbarren mit aufgelegten Plattierschichten mehreren Walzstichen unterzogen wird.

Die Herstellung von Aluminium-Verbundwerkstoffen, bestehend aus mindestens zwei unterschiedlichen Aluminiumwerkstoffen, das heißt zwei unterschiedlichen Aluminiumlegierungen, ist bei verschiedenen Anwendungen besonders vorteilhaft oder eröffnet erst die Verwendung von Aluminiumwerkstoffen für bestimmten Anwendungen. Das Walzplattieren stellt in diesem Zusammenhang ein Verfahren zur Herstellung von Aluminium-Verbundwerkstoffen dar, welches auf einfache Weise die Erzeugung großer Mengen von Aluminiumverbundbändern oder -folien erlaubt.

Das eigentliche Plattierwalzen erfolgt in mehreren Stufen, wobei das Umformvermögen während des Walzens durch den jeweiligen Werkstoff bedingt ist. Wird die Grenze des Umformvermögens erreicht, muß der Walzvorgang unterbrochen und eine erneute Erwärmung auf Walztemperatur (oberhalb der Rekristallisationsschwelle) durchgeführt werden. Die Barrendicke als Ausgangsformat für das Warmwalzen wird so gewählt, daß auch beim Walzen dicker Bleche eine möglichst gute Durchknetung des Gußgefüges erzielt wird. Je höher der Werkstoff legiert ist und je niedriger die Temperatur des Walzgutes beim letzten Stich ist, desto höher ist die im Werkstoff verbleibende Verfestigung. Dies führt bei den zum Walzplattieren vorgesehenen Platten oder Blechen.unter Umständen zu Schwierigkeiten, wenn sie die vorgeschriebenen Festigkeitswerte im Warmwalzzustand auf den zur Verfügung stehenden Walzgerüsten nicht erreichen. Das Plattierwalzen erfolgt etwa bei Temperaturen von 250° C bis 400° C ohne Zwischenglühen mit einem Schmiermittel, bestehend aus Walzöl, Walzemulsion oder Gemischen von Walzöl und Walzemulsion.

Durch die Herstellung von Aluminium-Verbundwerkstoffen lassen sich die Eigenschaften verschiedener Aluminiumwerkstoffe in optimaler Art und Weise kombinieren. So führt beispielsweise das Plattieren von hochfesten Aluminiumlegierungen mit besonders korrosionsbeständigen Aluminiumlegierungen zu einem Aluminium-Verbundwerkstoff, bei dem der Kernwerkstoff die erforderlichen Festigkeitswerte zur Verfügung stellt und der Plattierwerkstoff gleichzeitig für eine Oberfläche mit einer sehr guten Korrosionsbeständigkeit sorgt, die der Kernwerkstoff aufgrund seiner Optimierung im Hinblick auf die geforderte Festigkeit nicht bieten kann. Das Plattieren bietet weiter die Möglichkeit, einen Aluminium-Verbundwerkstoff herzustellen, dessen Kernwerkstoff einen Schmelzpunkt von beispielsweise 650° C aufweist, während der Plattierwerkstoff einen Schmelzpunkt von beispielsweise 620° C aufweist. Bauteile aus derartigen Aluminium-Verbundwerkstoffen können nun miteinander dadurch verbunden werden, daß die Bauteile gezielt auf etwa 630° C erwärmt werden, wodurch die Plattierschicht aufschmilzt und eine stoffschlüssige Verbindung mit dem angrenzenden Bauteil gewährleistet.

Aus dem Stand der Technik ist es bekannt, die Plattierschichten zur Verwendung in einem gattungsgemäßen Verfahren zur Herstellung eines Aluminium-Verbundwerkstoffes dadurch herzustellen, daß ein Barren bestehend aus dem Plattierwerkstoff auf die gewünschte Dicke auf einer Warmwalze heruntergewalzt wird. Aus dem so gewonnenen Band werden dann Platten zur Auflage auf den Kernbarren herausgetrennt und auf den Kernbarren aufgelegt, woraufhin dieser Verbund anschließend dem Plattierwalzen unterworfen wird.

Bei diesem konventionellen Verfahren zur Herstellung eines Aluminiumwerkstoffes ist zunächst problematisch, daß ein hoher zeitlicher Aufwand zur Herstellung der Plattierbleche auf der Warmwalze erforderlich ist. Die zeitliche Belastung der Warmwalze durch die Herstellung von Plattierblechen ist unter den Gesichtspunkten optimierter Arbeitsabläufe im Walzwerk problematisch. Gleichzeitig läßt sich prinzipbedingt nur eine schlechte Parallelität von walztechnisch hergestellten Plattierblechen herstellen, was zu einer ungleichmäßigen Plattierung führt, die, um Sicherheitsreserven zu gewährleisten, wiederum dazu führt, daß stärkere Plattierbleche eingesetzt werden müssen als bei optimaler Planparallelität ausreichend wären. Darüber hinaus lassen sich, wiederum prinzipbedingt, beim Walzvorgang aus einem Barren nur Plattierbleche gleicher Dicke herstellen. Dies führt einerseits zu erhöhten Lagerkosten für zunächst nicht benötigte Plattierbleche, andererseits zu erhöhten Herstellungskosten, da für Plattierbleche unterschiedlicher Stärke mehrere Barren aus dem Plattierwerkstoff einem Walzvorgang unterzogen werden müssen. Schließlich müssen die Oberflächen der walztechnisch hergestellten Plattierbleche vor dem Plattieren einer aufwendigen mechanischen und chemischen Vorbehandlung unterworfen werden, um eine einwandfreie Verbindbarkeit zwischen dem Kernbarren und den Plattierblechen durch das Plattierwalzen zu gewährleisten.

Der vorliegenden Erfindung liegt nun die Aufgabe zugrunde, ein Verfahren zur Herstellung eines Alumium-Verbundwerkstoffes zur Verfügung zu stellen, welches die bekannten Verfahren erheblich vereinfacht und darüber hinaus die Verwendung von Plattierschichten mit verbesserten Eigenschaften ermöglicht.

Die zuvor hergeleitete und aufgezeigte Aufgabe ist gemäß der Erfindung für ein Verfahren zur Herstellung eines Aluminium-Verbundwerkstoffes dadurch gelöst, daß die Plattierschichten durch Abtrennen von einem Barren hergestellt werden, wobei die Plattierschichten in einer Dicke von 2 bis 100mm von dem Barren abgetrennt werden. Dadurch, daß die Plattierschichten nicht mehr, wie bisher bekannt, durch Walzen aus einem aus dem Plattierwerkstoff bestehenden Barren gewonnen werden, sondern von dem Barren unmittelbar abgetrennt werden, ergibt sich eine Reihe von Vorteilen bei der Herstellung von Aluminium-Verbundwerkstoffen. Zunächst lassen sich aus einem Barren nunmehr auch Plattierschichten unterschiedlichster Dicken herstellen, was die Herstellung und Lagerung erheblich vereinfacht. Mit dem erfindungsgemäßen Verfahren läßt sich weiter ohne besonderen Aufwand die exakt benötigte Anzahl von Plattierschichten aus dem Ausgangsbarren herstellen. Das zeitaufwendige Warmwalzen des Barrens aus dem Plattierwerkstoff entfällt. Auch das bei walztechnisch hergestellten Plattierblechen regelmäßig notwendige Nachrecken der gewalzten Platten entfällt bei Plattierschichten, die unmittelbar von einem Barren abgetrennt werden.

Dadurch, daß gemäß einer Ausgestaltung der Erfindung die Plattierschichten von dem Barren durch Sägen abgetrennt werden, läßt sich eine sehr gute Planparallelität der Plattierschichten einstellen. Diese exakte Planparallelität führt zu einem Optimierungspotential hinsichtlich der notwendigen Dicke der Plattierschichten Außerdem vereinfacht sich der Anschweißvorgang zwischen Plattierschichten und Kernbarren deutlich. Schließlich ergeben sich auch reduzierte Anforderungen an die Oberflächenbearbeitung der durch Sägen von dem Barren abgetrennten Plattierschichten. Zum Abtrennen der Plattierschichten von dem Barren durch Sägen eignen sich insbesondere Bandsägen. Diese sind in bezug auf die gewährleistete Planparallelität und den minimierten Materialabtrag sehr gut zur Verwendung ih dem Verfahren gemäß der ersten Lehre der Erfindung geeignet.

Gemäß der Lehre der Erfindung werden die Plattierschichten in einer Dicke von 2 bis 100 mm von dem Barren abgetrennt. Diese Dicken lassen sich, wie bereits erwähnt, ohne weiteres von Plattierschicht zu Plattierschicht einstellen und gewährleisten somit die Herstellung von Plattierschichten aus einem einzigen Barren für unterschiedlichste Plattierdicken.

Eine Oberflächenbehandlung des Kernbarrens und/oder der Plattierschichten vor dem Walzen führt zu einer optimalen Verbindung zwischen dem Kernwerkstoff und dem Plattierwerkstoff beim Walzvorgang. Wie bereits erwähnt, sind jedoch die Anforderungen an die Oberflächenvorbereitungen bei beispielsweise durch Sägen gewonnenen Plattierschichten gegenüber den Anforderungen der Oberflächenbehandlungen bei walztechnisch hergestellten Plattierblechen erheblich reduziert, insbesondere im Hinblick auf eine chemische Oberflächenbehandlung.

Es gibt nun eine Vielzahl von Möglichkeiten, die erfindungsgemäße Lehren auszugestalten und weiterzubilden. Hierzu wird beispielsweise verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigt:
- Fig. 1: ein Ausführungsbeispiel eines mit zwei Plattierschichten versehenen Kernbarrens zur Verwendung in einem Verfahren zur Herstellung eines Aluminium-Verbundwerkstoffes und
- Fig. 2: ein Ausführungsbeispiel eines Barrens, von dem eine Plattierschicht abgetrennt wird.

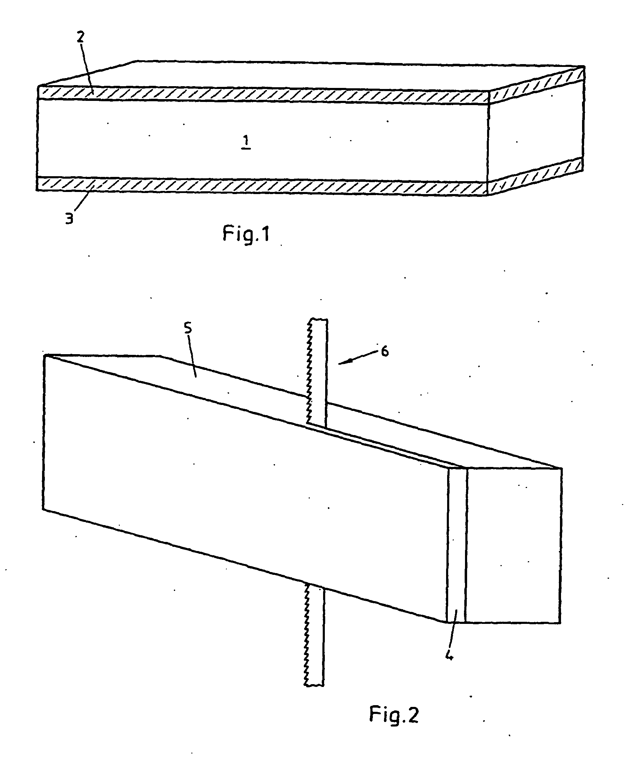

In dem in Fig.1 dargestellten Ausführungsbeispiel ist ein Kernbarren 1 an seiner Ober- und Unterseite mit jeweils einer Plattierschicht 2,3 versehen. Bei dem Werkstoff für die Plattierschichten 2,3 handelt es sich beispielsweise um korrosionsbeständige Aluminiumwerkstoffe, während der Werkstoff des Kernbarrens 1 eine hohe Festigkeit. aufweist.

In Fig. 2 ist die Herstellung einer Plattierschicht 4 aus einem Barren 5, bestehend aus dem Plattierwerkstoff, mit Hilfe einer Bandsäge 6 dargestellt. Beispielsweise ist vor einem Walzgerüst eine Bandsägeeinrichtung angeordnet, die den Walzbarren in Längsrichtung in mehrere Plattierschichten auftrennt, wobei die abgetrennten Plattierschichten auf einem direkt mit dem Kernbarren verbundenen Rollgang transportiert werden. Aus Fig. 2 ist unmittelbar ersichtlich, daß sich mit dem erfindungsgemäßen Verfahren ohne weiteres Plattierschichten 4 unterschiedlicher Dicke und exakter Planparallelität in der benötigen Plattenanzahl herstellen lassen.

## Patentansprüche

1. Verfahren zur Herstellung eines Aluminium-Verbundwerkstoffes, bei welchem auf einen Kernbarren zumindest einseitig eine Plattierschicht aufgelegt wird und der Kernbarren mit aufgelegten Plattierschichten mehreren Walzstichen unterzogen wird,
**dadurch gekennzeichnet, daß**
die Plattierschichten durch Abtrennen von einem Barren aus Plattierwerkstoff hergestellt sind und dass die Plattierschichten in einer Dicke von 2 bis 100 mm von dem Barren abgetrennt werden.

2. Verfahren nach Anspruch 1,
**dadurch gekennzeichnet, daß**
die Plattierschichten von dem Barren durch Sägen abgetrennt werden.

3. Verfahren nach Anspruch 1 oder 2,
**dadurch gekennzeichnet, daß**
der Kernbarren und/oder die Plattierschichten vor dem Walzen oberflächenbehandelt werden.

## Claims

1. A method for producing an aluminium composite material in which a cladding layer is placed at least onto one side of a core bar, and in which the core bar with cladding layers in place is subjected to several roll passes
**characterised in that**
the cladding layers are produced by being cut-off a bar made of cladding material and the cladding layers are cut off the bar at a thickness of 2 to 100 mm

2. The method according to claim 1,
**characterised in that**
the cladding layers are cut off the bar by sawing.

3. The method according to one of claims 1 to 3,
**characterised in that**
the core bar and/or the cladding layers are surface treated prior to rolling.

## Revendications

1. Procédé de production d'un matériau composite en aluminium, dans lequel une couche de placage est déposée au moins d'un côté sur un lingot de noyau et le lingot de noyau revêtu des couches de placage est soumis à plusieurs passes de laminage, **caractérisé en ce que** les couches de placage sont produites par séparation du lingot en un matériau de placage et **en ce que** les couches de placage sont séparées du lingot avec une épaisseur de 2 à 100 mm.

2. Procédé selon la revendication 1, **caractérisé en ce que** les couches de placage sont séparées du lingot par sciage.

3. Procédé selon la revendication 1 ou 2, **caractérisée en ce que** le lingot de noyau et / ou les couches de placage sont soumises à un traitement de surface avant le laminage.
